# EUROPÄISCHE PATENTSCHRIFT

(11) **EP 1 652 711 B1**
(45) Veröffentlichungstag und Bekanntmachung des Hinweises auf die Patenterteilung: **24.04.2013**
(21) Anmeldenummer: 05023221.4
(22) Anmeldetag: 25.10.2005
(51) Int. Cl.: B60J 10/02, B60R 13/07, B62D 25/08, B60J 10/00

(54) **Kraftfahrzeugkarosserie mit zumindest einem einer Windschutzscheibe zugeordneten Wasserabweiser**
Motor vehicle body comprising a windshield having at least one water deflector
Carrosserie de véhicule automobile comprenant un pare brise ayant au moins un déflecteur d'eau

(30) Priorität: 27.10.2004 DE 102004052172
(43) Veröffentlichungstag der Anmeldung: 03.05.2006
(73) Patentinhaber: GM Global Technology Operations LLC, Detroit, MI 48265-3000 (US)
(72) Erfinder: Haas, Helmut, 65307 Bad Schwalbach (DE); Springer, Peter, 65462 Ginsheim-Gustavsburg (DE)
(74) Vertreter: Daniel, Ulrich W.P.

(56) Entgegenhaltungen:
- DE-C1- 19 811 189
- JP-A- 7 232 666
- JP-A- 60 174 318
- US-A- 5 531 496
- US-B1- 6 193 305

## Beschreibung

Die Erfindung bezieht sich auf eine Kraftfahrzeugkarosserie mit zumindest einem einer Windschutzscheibe zugeordneten Wasserabweiser, der ein Rastmittel zur Verbindung mit der Kraftfahrzeugkarosserie umfasst und den weiteren Merkmalen im Oberbegriff des Anspruches 1.

Ein derartigere gattungsgemäßer Wasserabweiser ist in der DE 198 11 189 C1 beschrieben. Der Wasserabweiser besitzt eine Nut, die auf eine Abwinklung an der Karosserie aufgesteckt wird, wobei als Klemmmittel ein U-förmiges, elastisches Element vorgesehen ist, das in der Nut liegt und die Abwinklung umfasst. Die Nut wird zur Montage auf die Abwinklung aufgesteckt und zur Demontage von ihr abgezogen. Montage und Demontage erfolgt somit im Wesentlichen senkrecht zur Fahrzeughochachse.

Gemäß der US 6,193,305 ist der Wasserabweiser mittels eines Steckstiftes mit der Karosserie verbunden. Zum Lösen der Verbindung wird dieser stets in etwa parallel zur Hochachse des Fahrzeuges herausgezogen. Jedenfalls besteht auch hier für die Montage und die Demontage keine unterschiedlichen Richtungen.

Die DE 199 02 232 A1 zeigt eine Kraftfahrzeugkarosserie mit einer eine Windschutzscheibe fixierenden Stirnwandabdeckung und einem unterhalb der Windschutzscheibe angeordneten Wasserabweiser. Der Wasserabweiser weist eine Dichtung auf, die gegen eine Abbiegung der Stirnwandabdeckung anliegt. Zur Fixierung des Wasserabweisers ist ein Rastmittel vorgesehen, das hierzu mit einem Karosserieelement der Kraftfahrzeugkarosserie verbunden ist.

Weiterhin ist aus der DE 196 48 330 A1 eine Kraftfahrzeugkarosserie mit einer auf eine Stirnwandabdeckung geklebten Windschutzscheibe und einem Wasserabweiser an der Unterseite der Windschutzscheibe bekannt. Der Wasserabweiser endet mit einem geringen Abstand zur Unterkante der Windschutzscheibe. Ein Spalt zwischen der Unterkante der Windschutzscheibe und dem Wasserabweiser ist durch eine an der Stirnwandabdeckung befestigte und dichtend gegen die Windschutzscheibe und den Wasserabweiser anliegende Zierleiste abgedeckt. Die Zierleiste ist zum gleichzeitigen Befestigen an dem Wasserabweiser und der Stirnwandabdeckung und dadurch zum Verbinden des Wasserabweisers mit der Stirnwandabdeckung ausgebildet.

Es ist Aufgabe der Erfindung, eine Kraftfahrzeugkarosserie der eingangs genannten Art zu schaffen, deren zugeordneter Wasserabweiser in einfacher Weise lösbar ist.

Erfindungsgemäß wird die Aufgabe dadurch gelöst, dass das Rastmittel zur Verbindung mit der Aufnahme einen Kopfbereich und zur Verbindung mit der Kraftfahrzeugkarosserie einen sich an den Kopfbereich anschließenden Rastbereich aufweist, der einen Hauptsteg aufweist, der an seinem freien Ende mit Rastarmen versehen ist, wobei jeweils benachbarte und bezogen auf den Hauptsteg diametral gegenüberliegend angeordnete Rastarme zueinander höhenversetzt angeordnete Rastkanten aufweisen.

Durch diese Maßnahme ist in einfacher Weise der Wasserabweiser komplikationslos von der Kraftfahrzeugkarosserie abnehmbar, ohne dass beispielsweise der Wasserabweiser oder eine damit verbundene Stirnwandverstärkung beschädigt werden.

Zweckmäßigerweise ist die Aufnahme im Wesentlichen kastenförmig mit zumindest einer Vorderwand und zwei Seitenwänden ausgestaltet, wobei in der Vorderwand mindestens eine Eingriffsöffnung eingebracht ist. Durch die Eingriffsöffnung kann das Rastmittel mit der Aufnahme kraftschlüssig verbunden werden. Um das Rastmittel formschlüssig mit der Aufnahme zu verbinden, weist die Aufnahme einen Boden auf, der sich von der Vorderwand wegerstreckt. An dem Boden sind Begrenzungsstege angeordnet, die in Richtung zu einem Anbindungsende ragen, mit dem die Aufnahme mit dem Wasserabweiser verbunden ist. Vorzugsweise ist die Aufnahme mit dem Wasserabweiser einstückig hergestellt. Denkbar ist aber auch, dass die Aufnahme als separates Bauteil mit dem Wasserabweiser verbunden ist. Möglich ist es ferner, die Aufnahme ohne Seitenwände und/oder Begrenzungsstege zu gestalten. Selbstverständlich kann die Aufnahme in jeder denkbaren geometrischen Form, beispielsweise L-förmig, ausgestaltet sein. Hierbei ist die Eingriffsöffnung in dem senkrechten L-Steg anzuordnen, wobei der dazu senkrechte Steg den Boden bildet.

Die Begrenzungsstege weisen einen horizontalen Abstand auf, der in etwa der horizontalen Breite der Eingriffsöffnung entspricht. Vorzugsweise ist der horizontale Abstand der Begrenzungsstege etwas größer als die horizontale Breite der Eingriffsöffnung.

Zur Verbindung des Rastmittels mit der Aufnahme weist das Rastmittel den Kopfbereich auf. An den Kopfbereich schließt sich der Rastbereich zur Verbindung mit der Karosserie an. Der Kopfbereich ist bevorzugt U-förmig mit einem Kopfsteg und einem dazu gegenüberliegenden Fußsteg ausgestaltet, die mittels des Basissteges miteinander verbunden sind. Der Kopfsteg ist im Querschnitt gesehen vorzugsweise kegelförmig und der Fußsteg mit seiner dem Kopfsteg zugeordneten Auflagefläche vorzugsweise eben ausgestaltet. An einer zum Basissteg gegenüberliegenden Seite weist der Kopfsteg eine zum Fußsteg ausgerichtete Nase auf, wobei der Fußsteg an seinem freien Ende mit einer zur Nase entgegengerichteten Anlagekante versehen ist. Die Nase kann sich linienartig durchgehend oder unterbrochen über die gesamte Breite des Kopfstegs erstrecken. Denkbar ist aber auch, lediglich eine punktförmige Nase vorzusehen. Mittels der Nase kann sich der Kopfbereich an unterschiedliche Dicken des Bodens anpassen. Vorteilhafterweise ist der Kopfsteg aufbiegbar ausgestaltet, wodurch eine Federkraft ausgeübt wird, wenn die Nase an dem Boden anliegt. Durch die im Querschnitt gesehene kegelförmige Ausgestaltung des Kopfsteges wird eine Anlage an einer in der Nähe des Anbindungsendes angeordneten Kante der Eingriffsöffnung vermieden.

Bevorzugt ist der Fußschenkel etwas länger und breiter ausgestaltet als der Kopfschenkel. Der Wasserabweiser wird entlang einer Steckrichtung mit seinem Boden in den U-förmigen Kopfbereich eingesteckt. Der Boden legt sich auf der ebenen Auflagefläche an und wird durch Anlage einerseits an dem Basissteg und andererseits an der Anlagekante kraft- und formschlüssig verklemmt. Mittels der Nase liegt der Kopfsteg an einer zur Auflagefläche gegenüberliegenden Gegenfläche punktförmig bzw. linienförmig an.

Damit das Rastmittel mit der Kraftfahrzeugkarosserie zu verbinden ist, weist es in seinem Rastbereich den Hauptsteg auf, an dessen zum Kopfbereich gegenüberliegenden freien Ende die Rastarme angeordnet sind, die sich in Richtung zum Kopfbereich erstrecken. Der Hauptsteg ist vorzugsweise kreuzförmig ausgestaltet. Die Rastarme umfassen vorzugsweise jeweils einen schräg in Richtung zum Kopfbereich orientierten Steg, der an dem freien Ende des Hauptstegs angeordnet ist und sich V-förmig von dem Hauptsteg weggerichtet erstreckt, wobei der Steg in einen Raststeg übergeht, der im Wesentlichen parallel zu dem Hauptsteg verläuft. Damit sind federnde Rastarme gebildet. Zur Verrastung mit der Kraftfahrzeugkarosserie sind die Rastarme an ihrer zum Hauptsteg gegenüberliegenden Rastseite mit Rastkanten versehen. Dabei sind die jeweils benachbarten Rastarme an ihrer Rastseite unterschiedlich ausgebildet. Die Rastkanten sind bei den benachbarten Rastarmen ferner höhenversetzt angeordnet, damit ein Toleranzausgleich sichergestellt ist. Selbstverständlich sind die zum Hauptsteg diametral gegenüberliegenden Raststege entsprechend ausgebildet, was bedeutet, dass die sich schräg gegenüberliegenden Raststege jeweils gleich ausgestaltet sind.

Zum Lösen der Verbindung wird zunächst der Wasserabweiser in einer zur Steckrichtung entgegengerichteten Orientierung von dem Kopfbereich des Rastmittels gezogen. Damit sind die Rastarme zugänglich und können an ihren freien Enden in Richtung zum Hauptsteg gedrückt werden, wodurch das Rastmittel aus seiner kraft- bzw. formschlüssigen Verbindung mit der Kraftfahrzeugkarosserie zu lösen ist. Zweckmäßigerweise ist der Kopfbereich des Rastmittels U-förmig ausgestaltet. Damit ergibt sich eine um 90 ° versetzte Montage- und Demontagerichtung des Wasserabweisers. Wird der Wasserabweiser montiert, wird dieser im Wesentlichen parallel zu einer Fahrzeughochachse mit der Karosserie verbunden. Zum Lösen dagegen wird der Wasserabweiser entlang einer Fahrzeuglängsachse von dem Kopfbereich gezogen. Bei der Montage des Wasserabweisers ist das Rastmittel an dem Wasserabweiser vormontiert. Bei der Demontage verbleibt das Rastmittel als Einzelteil an der Kraftfahrzeugkarosserie vorerst zurück. Nachdem der Wasserabweiser demontiert ist, ist die Zugänglichkeit des Rastmittels gewährleistet, das nunmehr ausgebaut werden kann und wiederum am Wasserabweiser für eine erneute Montage vormontiert werden kann.

Um Toleranzen zwischen der Kraftfahrzeugkarosserie und dem Wasserabweiser sowie die Wärmeausdehnung des Wasserabweisers auszugleichen, sind insbesondere äußere Rastarme des Rastmittels schwimmend gelagert.

Damit ergibt sich eine äußerst einfache Montage und Demontage des Wasserabweisers sowohl in der Produktion als auch beim Service. Denn bei jeder Inspektion muss der Wasserabweiser demontiert werden. Zweckmäßigerweise ist das Rastmittel nach der Demontage wiederverwendbar. Um höhere Rückstellkräfte übertragen zu können besteht das Rastmittel aus einem hochwertigen Kunststoff. Vorzugsweise ist das Rastmittel aus einem gegenüber dem Wasserabweiser höher-wertigen Kunststoff gefertigt. Bevorzugt ermöglicht das Rastmittel mit dem Rastbereich (28) einen Toleranzausgleich in der Höhe. Insbesondere ist ein Toleranzausgleich in der Höhe von ca. ± 2 mm möglich. Ein Toleranzausgleich und eine Wärmeausdehnungsmöglichkeit ist durch die schwimmende Lagerung gewährleistet. Eine Vorfixierung der Rastmittel in der theoretischen Lage bei der Montage ist denkbar. Ein Spiel des Rastmittels zur Karosserie kann beispielsweise ± 1 mm betragen. Zudem können vorteilhaft bei unterschiedlichen Eingriffsöffnungen und/oder Aufnahmen am Wasserabweiser gleich ausgestaltete Rastmittel eingesetzt werden.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

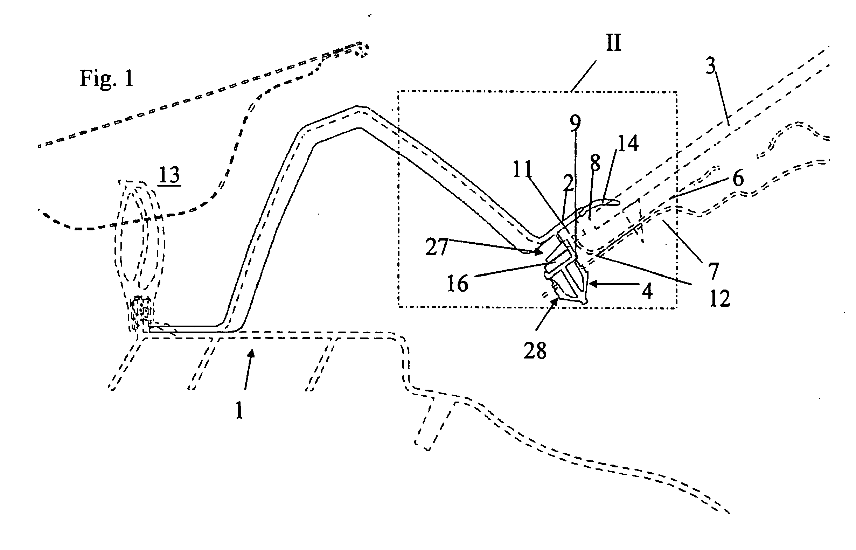

- Fig. 1: einen Teil-Längsschnitt durch einen unterhalb einer Windschutzscheibe liegenden Anschlussbereich einer erfindungsgemäßen Kraftfahrzeugkarosserie,
- Fig. 2: eine vergrößerte Darstellung der Einzelheit II nach Fig. 1 und
- Fig. 3: eine vergrößerte perspektivische Darstellung der Einzelheit III nach Fig. 2.

In den unterschiedlichen Figuren sind gleiche Teile mit denselben Bezugszeichen versehen, weswegen diese in der Regel auch nur einmal beschrieben sind.

Die Kraftfahrzeugkarosserie 1 ist über ein Rastmittel 4 mit einem der Windschutzscheibe 3 zugeordneten Wasserabweiser 2 verbunden und weist eine mit der Windschutzscheibe 3 gekoppelte Stirnwandabdeckung 6 auf, die mit einer Stirnwandverstärkung 7 versehen ist. Die Stirnwandverstärkung 7 springt über eine untere Kante 8 der Windschutzscheibe 3 vor, wodurch dort ein Freiraum 9 gebildet ist, der von dem Wasserabweiser 2 überbrückt ist.

Dem Wasserabweiser 2 ist eine als ein selbstklebender Dichtstreifen ausgeführte Dichtung 11 zugeordnet, die gegen einen von außen nicht sichtbaren rückwärtigen Abschnitt 10 des Wasserabweisers 2 und eine nach außen gerichtete Abbiegung 12 der Stirnwandabdeckung 6 anliegt, um die Stirnwandabdeckung 6 gegenüber dem sich von dem Freiraum 9 bis zu einer Motorhaube 13 erstreckenden Wasserabweiser 2 abzudichten. Mittels des als Clipsverbindung mit Rastarmen 58 ausgebildeten Rastmittels 4 ist der Wasserabweiser 2 mit der Stirnwandverstärkung 7 lösbar verbunden.

An der von außen sichtbaren Aussenkante des Wasserabweisers 2 ist zudem eine Dichtlippe 14 angeordnet, die abdichtend an der Windschutzscheibe 3 anliegt, deren untere Kante 8 zu der Dichtung 11 beabstandet ist. Innenseitig ist der Wasserabweiser 2 mit einer Aufnahme 16 versehen, die zum einen zur Verbindung mit dem Rastmittel 4 und zum anderen als Anlagefläche für die Dichtung 11 dient.

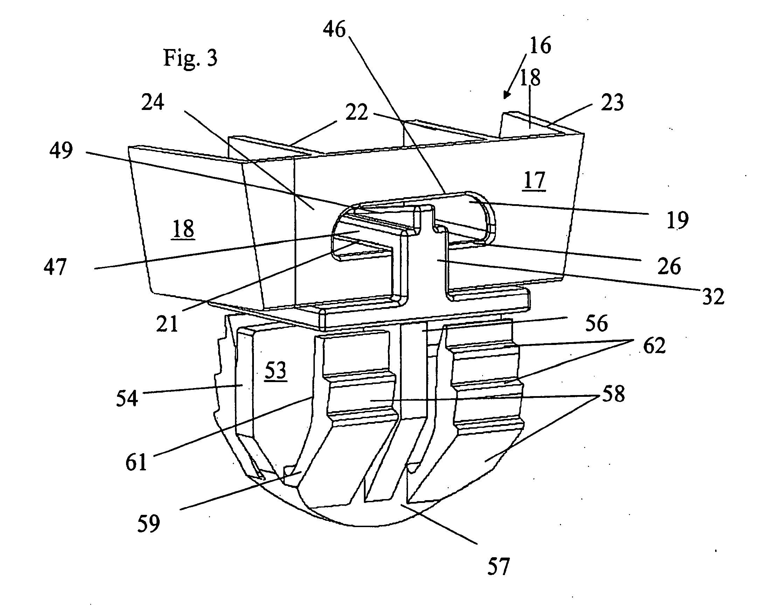

Die einstückig mit dem Wasserabweiser 2 hergestellte Aufnahme 16 ist im Wesentlichen kastenförmig mit einer Vorderwand 17, in die eine Eingriffsöffnung 19 eingebracht ist, und zwei gegenüberliegenden Seitenwänden 18 ausgestaltet (Fig. 3). Die Aufnahme 16 weist zudem einen Boden 21 auf, der zwischen den Seitenwänden 18 angeordnet ist und sich von der Vorderwand 17 bis zum Wasserabweiser 2 erstreckt. An dem Boden 21 sind zueinander beabstandete Begrenzungsstege 22 angeordnet, deren Abstand in etwa der horizontalen Öffnungsbreite der Eingriffsöffnung 19 entspricht. Die Begrenzungsstege 22 enden in Höhe eines Anbindungsendes 23 der Aufnahme 16, mit dem die Aufnahme 16 mit dem Wasserabweiser 2 verbunden ist. Zum einen sind seitliche Ränder 24 und zum anderen Kanten 26 der Eingriffsöffnung 19 abgerundet.

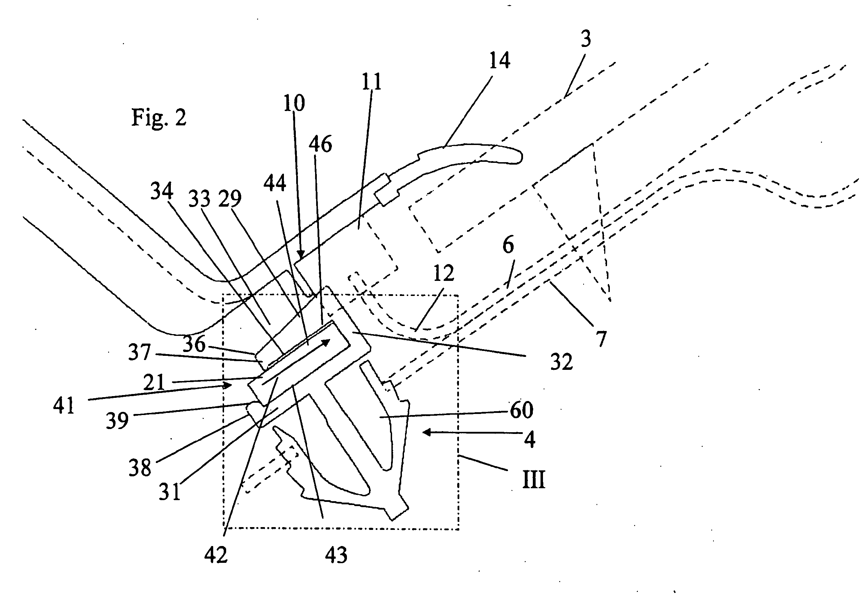

Das Rastmittel 4 weist einen Kopfbereich 27 und einen sich daran anschließenden Rastbereich 28 auf. Der Kopfbereich 27 ist im Wesentlichen U-förmig mit einem Kopfschenkel 29 und einem Fußschenkel 31 ausgestaltet, die mittels eines Basissteges 32 verbunden sind (Fig. 2). Der Kopfschenkel 29 ist im Querschnitt gesehen halbkegelförmig mit einer kegelförmigen Fläche 33 und einer dazu gegenüberliegenden ebenen Fläche 34 ausgeführt, die innerhalb der U-Form vorgesehen ist. Der Kopfschenkel 29 weist an seiner freien Kante 36 eine Nase 37 auf, die in Richtung zum Fußschenkel 31 orientiert ist. Der Fußschenkel 31 ist an seinem freien Ende 38 mit einer Anlagekante 39 versehen, die entgegengesetzt zur Nase 37 ausgerichtet ist. Der Fußschenkel 31 ist länger und breiter als der Kopfschenkel 29 ausgebildet. Durch die Nase 37 und die Anlagekante 39 ergibt sich eine leicht schräg geöffnete Einstecköffnung 41, durch die der Boden 21 der Aufnahme 16 entlang einer Steckrichtung gemäß dem Pfeil 42 in Richtung zum Basissteg 32 geführt wird, bis der Boden 21 hörbar mit dem Kopfbereich 27 verrastet. Hierbei liegt der Boden 21 eben an einer Auflagefläche 43 des Fußschenkels 31 an und ist zwischen dem Basissteg 32 und der Anlagekante 39 verklemmt. Durch die Anlage der Nase 37 an einer zur Auflagefläche 43 gegenüberliegenden Seite 44 des Bodens 21 ist ein Spalt 46 zwischen dem Kopfschenkel 29 und dem Boden 21 ausgebildet. Der Kopfschenkel 29 weist einen Grundschenkel 47 (Fig. 3) auf, der beidseitig eingezogen in eine Erhöhung 49 mit der oberseitigen Fläche 33 übergeht, wobei die Erhöhung 49 vom Basissteg 32 weggerichtet stetig abnimmt.

Der Rastbereich 28 des Rastmittels 4 weist einen Hauptsteg 53 auf, der als Kreuzsteg mit einem zur Vorderwand 17 der Aufnahme 16 parallelen Steg 54 und beidseitig dazu mittig senkrecht verlaufenden Stegen 56 ausgestaltet ist. Der Hauptsteg 53 umfasst an seinem freien Ende 57 angeordnete Rastarme 58, die jeweils mit einem schräg in Richtung zum Kopfbereich 27 weisenden Steg 59 ausgestaltet sind, der in einen Raststeg 61 übergeht. An dem Raststeg 61 sind gegenüberliegend zum Hauptsteg 53 Rastkanten 62 ausgebildet. Damit ist das Rastmittel 4 an seinem zum Kopfbereich 27 gegenüberliegenden freien Endbereich im Wesentlichen spitz zulaufend ausgestaltet und erweitert sich in Richtung zum Kopfbereich 27, weshalb das Rastmittel 4 leicht in eine Öffnung 60 der Stirnwandverstärkung 7 der Kraftfahrzeugkarosserie 1 eingesteckt und dort verrastet werden kann.

Das Rastmittel 4 weist vier Rastarme 58 auf. Die jeweils benachbarten Rastarme 58 sind an ihrem Raststeg 61 unterschiedlich ausgebildet. So umfasst einer der Rastarme 58 zwei Rastkanten 62 und der dazu direkt benachbarte Rastarm 58 drei Rastkanten 62. Die jeweiligen Rastkanten 62 benachbarter Rastarme 58 sind zueinander höhenversetzt. Die bezogen auf den Steg 54 schräg gegenüberliegend angeordneten Rastarme 58 sind jeweils gleich ausgebildet, weshalb die bezogen auf den Steg 54 diametral gegenüberliegenden Rastarme 58, wie zuvor beschrieben, unterschiedlich ausgebildet sind.

In dem dargestellten Ausführungsbeispiel ist lediglich eine Aufnahme 16 mit dem zugeordneten Rastmittel 4 dargestellt. Selbstverständlich können auch mehrere Aufnahmen 16 mit einem jeweils zugeordneten Rastmittel 4 vorgesehen sein, wobei insbesondere äußere Rastmittel 4 schwimmend gelagert sind.

### Bezugszeichenliste

- 1.: Kraftfahrzeugkarosserie
- 2.: Wasserabweiser
- 3.: Windschutzscheibe
- 4.: Rastmittel
- 5.:
- 6.: Stirnwandabdeckung
- 7.: Stirnwandverstärkung
- 8.: untere Kante v. 3
- 9.: Freiraum
- 10.: Abschnitt v. 2
- 11.: Dichtung
- 12.: Abbiegung
- 13.: Motorhaube
- 14.: Dichtlippe
- 15.:
- 16.: Aufnahme an 2
- 17.: Vorderwand
- 18.: Seitenwand
- 19.: Eingriffsöffnung
- 20.:
- 21.: Boden
- 22.: Begrenzungsstege
- 23.: Anbindungsende
- 24.: Ränder
- 25.:
- 26.: Kanten
- 27.: Kopfbereich
- 28.: Rastbereich
- 29.: Kopfschenkel
- 30.:
- 31.: Fußschenkel

- 32.: Basissteg
- 33.: kegelförmige Fläche
- 34.: ebene Fläche
- 35.:
- 36.: freie Kante
- 37.: Nase
- 38.: freies Ende
- 39.: Anlagekante
- 40.:
- 41.: Einstecköffnung
- 42.: Pfeil (Steckrichtung)
- 43.: Auflagefläche
- 44.: gegenüberliegend zu 43
- 45.:
- 46.: Spalt
- 47.: Grundschenkel
- 48.:
- 49.: Erhöhung
- 50.:
- 51.:
- 52.:
- 53.: Hauptsteg
- 54.: Steg
- 55.: .
- 56.: Hilfssteg
- 57.: freies Ende
- 58.: Rastarme
- 59.: Steg
- 60.: Öffnung v. 7
- 61.: Raststeg
- 62.: Rastkanten

## Patentansprüche

1. Kraftfahrzeugkarosserie mit zumindest einem einer Windschutzscheibe (3) zugeordneten Wasserabweiser (2), der ein Rastmittel (4) zur Verbindung mit der Kraftfahrzeugkarosserie (1) umfasst, wobei der Wasserabweiser (2) eine Aufnahme (16) für das Rastmittel (4) aufweist, wobei das Rastmittel zum einen mit der Kraftfahrzeugkarosserie (1) und zum anderen mit der Aufnahme (16) lösbar verbunden ist, und wobei das Rastmittel (4) zur Verbindung mit der Aufnahme (16) einen Kopfbereich (27) und zur Verbindung mit der Kraftfahrzeugkarosserie (1) einen sich an den Kopfbereich (27) anschließenden Rastbereich (28) aufweist und der Rastbereich (28) einen Hauptsteg (53) aufweist, der an seinem freien Ende (57) mit Rastarmen (58) versehen ist, **dadurch gekennzeichnet, dass** jeweils benachbarte und bezogen auf den Hauptsteg (53) diametral gegenüberliegend angeordnete Rastarme (58) zueinander höhenversetzt angeordnete Rastkanten (62) aufweisen.

2. Kraftfahrzeugkarosserie nach Anspruch 1, **dadurch gekennzeichnet, dass** die Aufnahme (16) mit mindestens einer eine Eingriffsöffnung (19) für das Rastmittel (4) aufweisenden Vorderwand (17) versehen ist.

3. Kraftfahrzeugkarosserie nach Anspruch 2, **dadurch gekennzeichnet, dass** die Aufnahme (16) einen sich von der Vorderwand (17) wegerstreckenden Boden (21) aufweist.

4. Kraftfahrzeugkarosserie nach einem der Ansprüche 1 bis 3, **dadurch gekennzeichnet, dass** die Aufnahme (16) mit dem Wasserabweiser (2) einstückig hergestellt ist.

5. Kraftfahrzeugkarosserie nach einem der vorhergehenden Ansprüche, **dadurch gekennzeichnet, dass** das Rastmittel (4) an seinem Kopfbereich (27) im Wesentlichen U-förmig mit einem Kopfschenkel (29) und einem Fußschenkel (31) ausgebildet ist, die mit einem Basissteg (32) verbunden sind.

6. Kraftfahrzeugkarosserie nach Anspruch 5, **dadurch gekennzeichnet, dass** das Rastmittel (4) an einer freien Kante (36) seines Kopfschenkels (29) eine in Richtung zu dem Fußschenkel (31) orientierte Nase (37) aufweist, wobei an einem freien Ende (38) des Fußschenkels (31) eine zur Nase (37) entgegengesetzt orientierte Anlagekante (39) angeordnet ist.

7. Kraftfahrzeugkarosserie nach Anspruch 5, **dadurch gekennzeichnet, dass** das Rastmittel (4) mit seinem Fußschenkel (31) länger und breiter ausgestaltet ist als mit seinem Kopfschenkel (29).

8. Kraftfahrzeugkarosserie nach einem der vorhergehenden Ansprüche, **dadurch gekennzeichnet, dass** die Rastarme (58) jeweils einen schräg in Richtung zum Kopfbereich (27) orientierten Steg (59) aufweisen, der in einen Raststeg (61) übergeht.

9. Kraftfahrzeugkarosserie nach einem der Ansprüche 1 bis 8, **dadurch gekennzeichnet, dass** das Rastmittel (4) wiederverwendbar ist.

10. Kraftfahrzeugkarosserie nach einem der Ansprüche 1 bis 9, **dadurch gekennzeichnet, dass** das Rastmittel (4) aus einem gegenüber dem Wasserabweiser (2) höherwertigen Kunststoff gefertigt ist.

11. Kraftfahrzeugkarosserie nach einem der Ansprüche 1 bis 10, **dadurch gekennzeichnet, dass** das Rastmittel (4) mit dem Rastbereich (28) einen Toleranzausgleich in der Höhe ermöglicht.

## Claims

1. A motor vehicle body, comprising at least one water deflector (2) associated with a windshield (3), said water deflector (2) having a latching means (4) for connection with the vehicle body (1), with the water deflector (2) having a receiver (16) for the latching means (4), with the latching means being detachably connected on the one hand with the vehicle body (1) and on the other hand with the receiver (16), and with the latching means (4) comprising a head region (27) for connection with the receiver (16) and a latching region (28) adjacent to the head region (27) for connection with the vehicle body (1), and the latching region (28) comprises a main web (53) which is provided at its free end (57) with latching arms (58), **characterized in that** respectively adjacent latching arms (58) which are arranged diametrically opposite of one another with respect to the main web (53) comprise latching edges (62) which are arranged staggered in height with respect to each other.

2. A motor vehicle body according to claim 1, **characterized in that** the receiver (16) is provided with at least one front wall (17) having an engagement opening (19) for the latching means (4).

3. A motor vehicle body according to claim 2, **characterized in that** the receiver (16) has a base (21) extending away from the front wall (17).

4. A motor vehicle body according to one of the claims 1 to 3, **characterized in that** the receiver (16) is made integrally with the water deflector (2).

5. A motor vehicle body according to one of the preceding claims, **characterized in that** the latching means (4) is arranged in its head region (27) in a substantially U-shaped way with a head leg (29) and a base leg (31), which are connected with a base web (32).

6. A motor vehicle body according to claim 5, **characterized in that** the latching means (4) comprises a protrusion (37) on a free edge (36) of its head leg (29), said protrusion (37) being oriented in the direction towards the base leg (31), with a contact edge (39) being arranged on a free end (38) of the base leg (31), said contact edge (39) being oriented in opposite direction to the protrusion (37).

7. A motor vehicle body according to claim 5, **characterized in that** the latching means (4) is arranged in a longer and wider way with its base leg (31) than with its head leg (29).

8. A motor vehicle body according to one of the preceding claims, **characterized in that** the latching arms (58) respectively comprise a web (59) which oriented in an oblique manner in the direction towards the head region (27) and which converges into a latching web (61).

9. A motor vehicle body according to one of the claims 1 to 8, **characterized in that** the latching means (4) is reusable.

10. A motor vehicle body according to one of the claims 1 to 9, **characterized in that** the latching means (4) is made of a plastic material which is of higher quality in comparison with the water deflector (2).

11. A motor vehicle body according to one of the claims 1 to 10, **characterized in that** the latching means (4) enables tolerance compensation in respect of height with the latching region (28).

## Revendications

1. Carrosserie de véhicule à moteur avec au moins un déflecteur d'eau (2) associé à un pare-brise (3), qui comprend un moyen d'emboîtement (4) pour l'assemblage à la carrosserie de véhicule à moteur (1), dans laquelle le déflecteur d'eau (2) présente un logement (16) pour le moyen d'emboîtement (4), le moyen d'emboîtement étant relié de manière amovible, d'une part, à la carrosserie de véhicule à moteur (1) et d'autre part, au logement (16), et dans laquelle le moyen d'emboîtement (4) présente pour l'assemblage avec le logement (16) une partie de tête (27) et pour l'assemblage à la carrosserie de véhicule à moteur (1) une partie d'emboîtement (28) faisant suite à la partie de tête (27) et la partie d'emboîtement (28) présente une barrette principale (53) qui est munie à son extrémité libre (57) de bras d'emboîtement (58), **caractérisée en ce que** les bras d'emboîtement (58) voisins l'un de l'autre et diamétralement opposés par rapport à la barrette principale (53) présentent des bords d'emboîtement (62) décalés en hauteur l'un par rapport à l'autre.

2. Carrosserie de véhicule à moteur selon la revendication 1, **caractérisée en ce que** le logement (16) est muni d'au moins une paroi antérieure (17) présentant une ouverture de prise (19) pour le moyen d'emboîtement (4).

3. Carrosserie de véhicule à moteur selon la revendication 2, **caractérisée en ce que** le logement (16) présente un fond (21) qui s'étend en s'éloignant de la paroi antérieure (17).

4. Carrosserie de véhicule à moteur selon l'une des revendications 1 à 3, **caractérisée en ce que** le logement (16) est fabriqué d'une pièce avec le déflecteur d'eau (2).

5. Carrosserie de véhicule à moteur selon l'une des revendications précédentes, **caractérisée en ce que** le moyen d'emboîtement (4) est sensiblement en forme de U dans sa partie de tête (27) avec un bras de tête (29) et un bras de pied (31) qui sont reliés par une barrette de base (32).

6. Carrosserie de véhicule à moteur selon la revendication 5, **caractérisée en ce que** le moyen d'emboîtement (4) présente sur un bord libre (36) de son bras de tête (29) un ergot (37) orienté en direction du bras de pied (31), un bord d'appui (39) orienté dans le sens inverse de l'ergot (37) étant disposé sur une extrémité libre (38) du bras de pied (31).

7. Carrosserie de véhicule à moteur selon la revendication 5, **caractérisée en ce que** le moyen d'emboîtement (4) est plus long et plus large dans son bras de pied (31) que dans son bras de tête (29).

8. Carrosserie de véhicule à moteur selon l'une des revendications précédentes, **caractérisée en ce que** les bras d'emboîtement (58) présentent chacun une barrette (59) orientée en oblique vers la partie de tête (27), avec une transition vers une barrette d'emboîtement (61).

9. Carrosserie de véhicule à moteur selon l'une des revendications 1 à 8, **caractérisée en ce que** le moyen d'emboîtement (4) est réutilisable.

10. Carrosserie de véhicule à moteur selon l'une des revendications 1 à 9, **caractérisée en ce que** le moyen d'emboîtement (4) est fabriqué dans une matière plastique de plus grande qualité que le déflecteur d'eau (2).

11. Carrosserie de véhicule à moteur selon l'une des revendications 1 à 10, **caractérisée en ce que** le moyen d'emboîtement (4) permet avec la partie d'emboîtement (28) une compensation des tolérances en hauteur.
